# FASCICULE DE BREVET EUROPEEN

(11) **EP 2 480 483 B1**
(45) Date de publication et mention de la délivrance du brevet: **17.07.2013**
(21) Numéro de dépôt: 10770539.4
(22) Date de dépôt: 08.09.2010
(51) Int. Cl.: B66C 13/46, B65G 63/00, G06Q 10/00, G06Q 10/08

(54) **PROCEDE DE POSITIONNEMENT RELATIF DE VEHICULES TERRESTRES PAR RAPPORT A UNE GRUE**
VERFAHREN ZUR RELATIVEN POSITIONIERUNG VON LANDFAHRZEUGEN BEZÜGLICH EINES KRANS
METHOD FOR THE RELATIVE POSITIONING OF LAND VEHICLES WITH RESPECT TO A CRANE

(30) Priorité: 21.09.2009 FR 0956476
(43) Date de publication de la demande: 01.08.2012
(73) Titulaire: Envision Vehicle Engineering Novasio Technology Event, 70400 Hericourt (FR)
(72) Inventeur: HECKY, Stéphane, F-90300 Eloie (FR); BALON, Pascal, F-25550 Dung (FR)
(74) Mandataire: Rhein, Alain
(86) Numéro de dépôt international: PCT/FR2010/051865
(87) Numéro de publication internationale: WO 2011/033210

(56) Documents cités:
- EP-A1- 0 748 080
- EP-A1- 1 182 154
- WO-A1-03/078292
- WO-A1-2004/041707
- DE-A1- 4 005 538
- JP-A- 4 147 303
- US-A1- 2004 125 985
- US-A1- 2008 252 417
- US-A1- 2008 304 443

## Description

La présente invention entre dans le cadre de la manutention de charges, en particulier le chargement et le déchargement de conteneur.

On notera qu'un tel conteneur, ou "container", présente une forme parallélépipédique rectangle dont les dimensions ont été normalisées au niveau international, à savoir huit pieds de large pour une longueur de vingt, trente ou quarante pieds.

L'invention trouvera une application préférentielle, mais aucunement limitative, dans la manutention de conteneur au sein d'une infrastructure portuaire, pour le transbordement depuis un véhicule maritime, tel un bateau de type porte-conteneurs, vers un véhicule terrestre, et inversement. Ce transbordement est généralement effectué à partir de grues équipées d'un palonnier, communément appelé "spreader".

Dans ce cadre, le chargement et le déchargement de conteneurs nécessitent un temps d'immobilisation des véhicules concernés qu'il convient de diminuer au maximum pour améliorer la rentabilité et les coûts ainsi engendrés.

C'est pour cette raison que les palonniers ont été modifiés de manière à passer d'une manutention simple, déplacement d'un unique conteneur à chaque mouvement entre les véhicules, à multiple, permettant de déplacer plusieurs conteneurs, sous forme d'une ou plusieurs rangées, en un seul mouvement.

Toutefois, si la récupération ou la dépose de rangées de conteneurs au niveau d'un bateau porte-conteneurs est aisée, il n'en va pas de même au niveau des véhicules terrestres. En effet, plusieurs véhicules terrestres doivent alors être positionnés de manière précise, sous la grue, de sorte que l'opérateur puisse y déposer ou y récupérer les conteneurs avec un minimum de manipulations, notamment en intervenant le moins possible sur l'écartement des palonniers.

Pour ce faire, il existe des systèmes de positionnement de véhicules terrestres, en particulier de leur châssis, par rapport à la grue. Une solution simple et répandue consiste en un marquage au sol, délimitant les emplacements des véhicules par rapport à la grue. Les conducteurs n'ont plus qu'à garer leur véhicule aux endroits spécifiés. En complément, sont installés des systèmes de feu de trafic tricolore, permettant d'indiquer au conducteur quand s'arrêter. Cette solution reste toutefois précaire et n'apporte pas entière satisfaction. De plus, si le placement dans le sens d'avancement, à savoir longitudinal, peut être relativement précis, le positionnement latéral du véhicule reste imprécis.

C'est pourquoi, il a été imaginé de coordonner directement le placement des véhicules par rapport à la grue. Une solution consiste en un guidage manuel du chauffeur par l'opérateur de la grue au travers de moyens d'affichage embarqués au sein du véhicule, au niveau de l'habitacle. L'efficacité d'un tel système dépend toutefois des instructions données au conducteur et ne permet pas, ou difficilement, de positionner plusieurs véhicules simultanément.

Pour pallier cet inconvénient, toujours dans un souci d'optimisation, des systèmes automatiques ont été mis en place de manière à transmettre des instructions à plusieurs véhicules simultanément pour qu'ils se positionnent correctement sous la grue. De tels systèmes automatiques utilisent un référencement global centré par rapport à la grue qui transmet ses instructions à chaque véhicule en fonction de la position détectée du véhicule concerné. Cette détection peut s'effectuer par de nombreux moyens, tels des faisceaux laser ou infrarouge avec des cibles ou balises montées sur les véhicules ou bien des couples émetteur/récepteur disposés sur le véhicule et la grue.

D'autres systèmes, tel un positionnement global par satellite (GPS), ont été envisagés, mais n'apportent pas une précision satisfaisante et servent donc à un premier positionnement grossier, avant d'utiliser un système automatique susmentionné.

Les méthodes et dispositifs de positionnement de l'état de la technique présentent un inconvénient majeur du fait du référencement global centré par rapport à la grue. De plus, de tels systèmes doivent notamment attendre que le positionnement du ou des véhicules de tête soit effectué pour permettre le positionnement des autres véhicules.

Les documents WO 03/078292, DE 40.05.538 et EP 1.182.154 illustrent cet état des connaissances de l'homme du métier dans le domaine.

La présente invention a pour but de pallier les inconvénients de l'état de la technique en proposant une nouvelle solution de positionnement relatif des véhicules par rapport à la grue, en particulier un positionnement relatif des véhicules entre eux.

Pour ce faire, la présente invention a pour objet un procédé de positionnement relatif de véhicules terrestres par rapport à une grue de chargement et déchargement d'une charge réciproquement vers et depuis lesdits véhicules.

Au sein d'un tel procédé de positionnement un premier véhicule se positionne sous ladite grue, caractérisé en ce qu'au moins un second véhicule détecte la position du premier véhicule pour se positionner par rapport à lui.

Selon une autre caractéristique, le positionnement des véhicules s'effectue en temps réel.

Avantageusement, le positionnement dudit second véhicule s'effectuant tandis que le premier véhicule est en mouvement.

De plus, le positionnement du premier véhicule sous la grue s'effectue par rapport à un repère global centré sous la grue ou au travers d'informations de guidage transmises depuis ladite grue.

Préférentiellement, ce procédé consiste à calculer les différentiels de coordonnées, selon au moins deux axes, des positions entre le premier et le second véhicule, puis en fonction desdits différentiels de transmettre des indications de guidage audit second véhicule.

Selon un mode de réalisation, un degré de tolérance est appliqué auxdits différentiels.

L'invention assure ainsi un positionnement précis des véhicules entre eux, en temps réel, et qui peut s'effectuer simultanément.

D'autres caractéristiques et avantages de l'invention ressortiront de la description détaillée qui va suivre des modes de réalisation non limitatifs de l'invention, en référence aux figures annexées dans lesquelles :

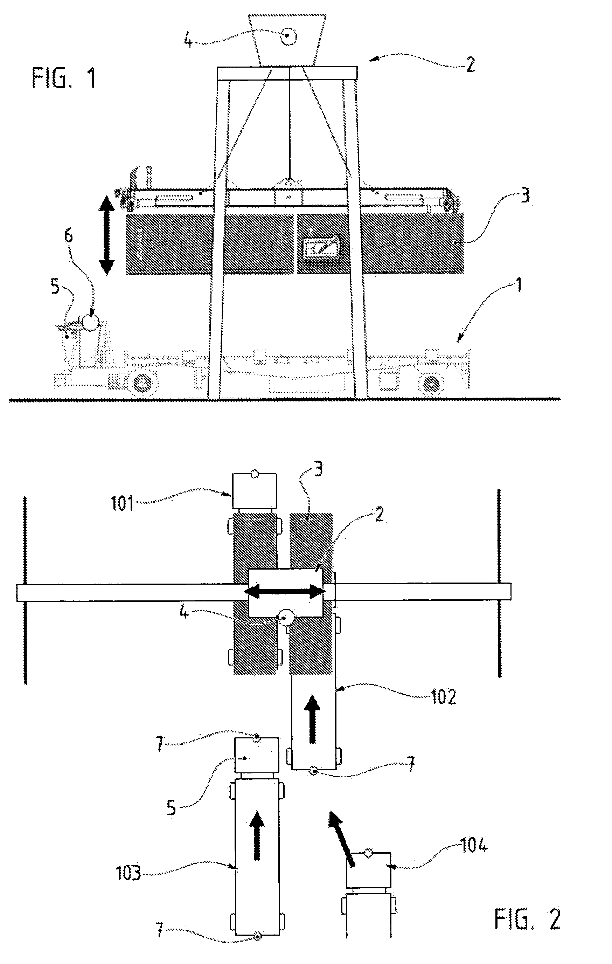

- la figure 1 représente schématiquement une vue de côté d'une grue en cours de chargement/déchargement de conteneurs sur un véhicule ; et
- la figure 2 représente schématiquement une vue de dessus d'une même grue en phase de chargement/déchargement de conteneurs sur plusieurs véhicules en train de ce positionner relativement les uns par rapport aux autres au moyen du procédé selon l'invention.

La présente invention concerne le positionnement de véhicules terrestres 1 par rapport à une grue 2 de chargement et déchargement d'une charge, notamment au moins un conteneur 3, réciproquement vers et depuis lesdits véhicules 1.

Avantageusement, le positionnement selon l'invention est relatif, à savoir qu'il envisage de positionner, par rapport à ladite grue 2, un second véhicule 102 par rapport à un premier véhicule 101 déjà positionné ou en cours de positionnement. Dans ce dernier cas, le positionnement de plusieurs véhicules 101, 102, 103, 104 s'effectue alors de manière simultanée.

Pour ce faire, l'invention a pour objet un procédé de positionnement relatif de véhicules terrestres 101, 102, 103, 104 par rapport à ladite grue 2, en particulier d'au moins deux véhicules 101 et 102.

Tout d'abord, un tel procédé prévoit de positionner un premier véhicule 101 sous ladite grue 2 de manière standard, à savoir par rapport à un référentiel global centré sur la grue 2.

Ce positionnement initial du premier véhicule 101 peut s'effectuer de différentes manières, en particulier en transmettant des données de positionnement depuis la grue 2.

Ainsi, le positionnement du premier véhicule 101 sous la grue 2 s'effectue par rapport à un repère global centré sous la grue 2 ou directement au travers d'informations de guidage transmises depuis ladite grue 2. Ces informations de guidages peuvent être communiquées par un opérateur ou bien de manière automatique.

Par ailleurs, ces données peuvent être transmises automatiquement par la grue 2 et le système de positionnement envisagé. En effet, la grue 2 peut alors embarquer des moyens de détection 4 d'au moins un véhicule 101 dans une zone délimitée. Dès la détection d'un véhicule, en l'absence d'un autre véhicule déjà présent dans ladite zone, le système détermine qu'il s'agit du premier véhicule 101 et lui envoie les directives pour son placement.

Avantageusement, après ce positionnement initial, un second véhicule 102 détecte la position du premier véhicule 101 pour se positionner par rapport à lui.

De manière générale, le système selon l'invention prévoit que tout véhicule peut détecter la présence d'un autre véhicule et l'identifier.

A ce titre, on notera que le premier véhicule 101 peut recevoir une identification spécifique pour que les autres véhicules 102, 103, 104 l'identifient comme tel et se positionnent par rapport à lui.

De plus, plusieurs véhicules 102,103,104 peuvent alors se positionner par rapport audit premier véhicule 101, mais aussi les uns par rapport aux autres, par affectation d'un identifiant déterminant leur positionnement. L'identifiant peut alors être un code correspondant à l'ordre sur une grille de placement ou bien aux coordonnées de positionnement.

Selon un mode préférentiel de réalisation, l'aspect relatif du positionnement selon l'invention consiste à calculer les différentiels de coordonnées des positions entre le premier 101 et le second 102 véhicules, puis en fonction desdits différentiels de transmettre des indications de guidage audit second véhicule 102.

Ces différentiels peuvent être calculés selon au moins deux axes de coordonnées, notamment au sol selon un repère cartésien en deux dimension, avec un axe des abscisses X et un axe des ordonnées Y. Ce repère peut être centré sur la grue 2 ou sur le premier véhicule 101.

Lesdits différentiels permettent de guider automatiquement le placement du second véhicule 102 ou bien de communiquer des instructions de guidage ou de conduite au conducteur du véhicule.

On notera que peut être appliqué un seuil minimum auxdits différentiels, de manière à positionner les véhicules avec une distance minimale entre eux.

De plus, un degré de tolérance peut être appliqué auxdits différentiels. En d'autres termes, le positionnement prévoit une distance limite, de l'ordre d'un ou plusieurs centimètres, pour considérer le positionnement d'un véhicule comme correct. Ce degré peut être calculé en fonction de la tolérance du palonnier pour le chargement et le déchargement.

Par ailleurs, le procédé de positionnement relatif selon l'invention permet de placer les véhicules 101, 102, 103, 104 en temps réel. Pour ce faire, chaque détection des véhicules entre eux et de la grue 2 vers le premier véhicule 101 est réalisée avec une fréquence de rafraichissement élevée.

Cette particularité permet de positionner le second véhicule 102 tandis que le premier véhicule 101 est en mouvement. Ainsi, l'invention permet de gagner du temps dans le positionnement, puisqu'il n'est plus nécessaire d'attendre le placement d'un véhicule pour en positionner un autre.

Selon le mode préférentiel de réalisation, la communication des données de guidage auprès du conducteur peut s'effectuer au travers de moyens de visualisation, préférentiellement embarqués au sein de la cabine de pilotage 5 de chaque véhicule 1.

De plus, chaque véhicule 1 peut être indépendant, embarquant un système de détection et de guidage. De manière non exhaustive, tout type de détecteur, sous forme d'émetteur et de récepteur, peut être envisagé.

Selon un mode particulier de réalisation, au moins un émetteur 6 est disposé au niveau de chaque véhicule 1, permettant de le localiser et de l'identifier. Un tel émetteur 6 peut être disposé en partie haute du véhicule 1, par exemple sur le toit de la cabine de pilotage 5.

De plus, un récepteur peut être monté sur la grue 2 de manière à collecter les informations de positions et d'identification de tous les véhicules alentours, notamment présents dans ladite zone précédemment évoquée. Un tel récepteur peut être intégré aux moyens de détection 4.

Avantageusement, ladite grue 2 peut embarquer un calculateur qui compile les données relatives aux coordonnées des différents véhicules présents sous la grue 2, soit dans la zone. Un tel calculateur permet, en autre, d'envoyer des données de guidage au premier véhicule 101 pour son positionnement.

La grue 2 peut aussi posséder un émetteur, distinct ou non, permettant d'envoyer vers tous les véhicules 101, 102, 103, 104 ces données compilées.

Dès lors un récepteur peut être embarqué au sein de chaque véhicule pour recevoir lesdites données compilées. Un véhicule peut alors connaître la position de tous les autres véhicules par l'intermédiaire des données compilées transmises par la grue 2.

On notera que la détection, l'émission et la réception des données au niveau de chaque véhicule peut s'effectuer par de nombreux moyens 7, tels des faisceaux laser ou infra-rouge avec des cibles ou balises montées sur les véhicules, à l'avant et/ou à l'arrière, ou bien des couples émetteur / récepteur disposés sur le véhicule et la grue.

De plus, chaque véhicule peut embarquer un système de calcul des différentiels, sur la base des données compilées reçues ou bien directement par détection des autres véhicules. Comme évoqué précédemment, ce système de calcul génère des instructions de guidage qui sont communiquées au conducteur, notamment par l'intermédiaire de moyens de visualisation à l'intérieur de la cabine de pilotage.

Ce système de calcul peut aussi être paramétrable par le conducteur du véhicule, selon cas de figure qui se présentent. En particulier, lors du chargement d'un conteneur 3, chaque véhicule peut avoir une zone de destination différente et il convient donc de les positionner de manière à optimiser leurs trajets et manoeuvres.

A titre d'exemple, un mode de fonctionnement configurable peut consister à choisir la rangée, soit son axe de déplacement longitudinal, en abscisse X. Le chauffeur n'a plus qu'à s'aligner et progresser jusqu'à atteindre la position exacte en Y.

On notera que les données échangées et transmises peuvent se présenter sous toute forme, notamment une matrice de coordonnées permettant de localiser les véhicules accompagnée de l'identifiant de ce dernier.

Le positionnement relatif selon l'invention trouvera une application particulière dans le guidage de tracteur et automoteur portuaire, dans un mode semi-automatique, à savoir une conduite exécutée par des chauffeurs mais guidée par les instructions transmises via le procédé selon l'invention.

De plus, l'invention peut venir en complément d'un système de positionnement GPS au sein d'un terminal portuaire entièrement automatisé. En effet, l'invention pourra utiliser le système de positionnement global du terminal, ou bien le système mondial de positionnement par satellite, pour effectuer un positionnement grossier de véhicules sous la grue 2 concernée puis le positionnement selon l'invention prend le relais, notamment à la détection d'un ou plusieurs véhicules dans une zone spécifiée et délimitée aux alentours de ladite grue 2.

L'invention permet de positionner plusieurs véhicules simultanément, par rapport à la grue 2 et par rapport aux autres véhicules. Elle offre donc une grande flexibilité d'utilisation pour différents type de chargement et déchargement, aussi bien multiple que simple. En effet, dans le cas du chargement ou déchargement d'un unique conteneur 3, l'invention permet de guider et d'aligner précisément plusieurs véhicules, optimisant le temps de manoeuvre.

Enfin, l'invention peut être entièrement intégrée au sein des véhicules, la grue 2 ne servant plus de repère global. Chaque véhicule peut alors évoluer indépendamment par rapport à la grue et s'orienter par rapport aux autres véhicules déjà présents.

## Revendications

1. Procédé de positionnement relatif de véhicules terrestres par rapport à une grue (2) de chargement et déchargement d'une charge réciproquement vers et depuis lesdits véhicules, dans lequel un premier véhicule (101) se positionne sous ladite grue (2), **caractérisé en ce qu'**au moins un second véhicule (102) détecte la position du premier véhicule (101) pour se positionner par rapport à lui.

2. Procédé de positionnement relatif selon la revendication 1, **caractérisé en ce que** le positionnement des véhicules (101,102) s'effectue en temps réel.

3. Procédé de positionnement relatif selon l'une quelconque des revendications 1 ou 2, **caractérisé en ce que** le positionnement dudit second véhicule (102) s'effectue tandis que le premier véhicule (101) est en mouvement.

4. Procédé de positionnement relatif selon l'une quelconque des revendications précédentes, **caractérisé en ce que** le positionnement du premier véhicule (101) sous la grue (2) s'effectue par rapport à un repère global centré sous ladite grue (2) ou au travers d'informations de guidage transmises depuis ladite grue (2).

5. Procédé de positionnement relatif selon l'une quelconque des revendications précédentes, **caractérisé en ce qu'**il consiste à calculer les différentiels de coordonnées, selon au moins deux axes, des positions entre le premier (101) et le second (102) véhicules, puis en fonction desdits différentiels de transmettre des indications de guidage audit second véhicule (102).

6. Procédé de positionnement relatif selon la revendication 5, **caractérisé en ce qu'**un degré de tolérance est appliqué auxdits différentiels.

## Patentansprüche

1. Verfahren zur relativen Positionierung von Landfahrzeugen bezüglich eines Krans (2) zum Laden und Abladen einer Last auf bzw. ab den genannten Fahrzeugen, bei dem sich ein erstes Fahrzeug (101) unterhalb des genannten Krans (2) positioniert, **dadurch gekennzeichnet, dass** zumindest ein zweites Fahrzeug (102) die Position des ersten Fahrzeugs (101) detektiert, um sich bezüglich dieses letzteren zu positionieren.

2. Verfahren zur relativen Positionierung nach Anspruch 1, **dadurch gekennzeichnet, dass** die Positionierung der Fahrzeuge (101, 102) in Echtzeit erfolgt.

3. Verfahren zur relativen Positionierung nach irgendeinem der Ansprüche 1 oder 2, **dadurch gekennzeichnet, dass** die Positionierung des genannten zweiten Fahrzeugs (102) erfolgt während das erste Fahrzeug (101) sich bewegt.

4. Verfahren zur relativen Positionierung nach irgendeinem der vorgehenden Ansprüche, **dadurch gekennzeichnet, dass** die Positionierung des ersten Fahrzeugs (101) unterhalb des Krans (2) bezüglich eines globalen Bezugspunktes erfolgt, das unterhalb des genannten Krans (2) zentriert ist, oder mittels Führungsinformationen, die von dem genannten Kran (2) ausgesandt werden.

5. Verfahren zur relativen Positionierung nach irgendeinem der vorgehenden Ansprüche, **dadurch gekennzeichnet, dass** es darin besteht, die Koordinatenunterschiede nach mindestens zwei Achsen der Positionen zwischen dem ersten (101) und dem zweiten (102) Fahrzeug zu berechnen, anschließend in Abhängigkeit von den genannten Unterschieden Führungsindikationen an dem genannten zweiten Fahrzeug (102) weiterzuleiten.

6. Verfahren zur relativen Positionierung nach Anspruch 5, **dadurch gekennzeichnet, dass** ein Toleranzgrad auf den genannten Unterschieden angewandt wird.

## Claims

1. Method for the relative positioning of land vehicles with respect to a crane (2) for loading and unloading a load reciprocally onto and from said vehicles, in which a first vehicle (101) is positioned under said crane (2), wherein at least one second vehicle (102) detects the position of the first vehicle (101), in order to position itself with respect to the latter.

2. Method for the relative positioning according to claim 1, wherein the positioning of the vehicles (101, 102) occurs in real time.

3. Method for the relative positioning according to any of claims 1 or 2, wherein the positioning of said second vehicle (102) occurs while the first vehicle (101) is moving.

4. Method for the relative positioning according to any of the preceding claims, wherein the positioning of the first vehicle (101) under the crane (2) is carried out with respect to a global mark centred under said crane (2) or through guiding information transmitted from said crane (2).

5. Method for the relative positioning according to any of the preceding claims, wherein it consists in calculating the coordinate differentials, according to at least two axes, of the positions between the first (101) and the second (102) vehicles, then in transmitting, depending on said differentials, guiding indications to said second vehicle (102).

6. Method for the relative positioning according to claim 5, wherein a degree of tolerance is applied to said differentials.
